# EUROPEAN PATENT SPECIFICATION

(11) **EP 2 880 567 B1**
(45) Date of publication and mention of the grant of the patent: **01.05.2019**
(21) Application number: 13826131.8
(22) Date of filing: 21.05.2013
(51) Int. Cl.: H04M 1/725, G06F 9/451, G06F 9/445

(54) **METHOD AND APPARATUS FOR SWITCHING SOFTWARE INTERFACE OF A MOBILE TERMINAL**
VERFAHREN UND VORRICHTUNG ZUM UMSCHALTEN EINER SOFTWARESCHNITTSTELLE EINES MOBILEN ENDGERÄTS
PROCÉDÉ ET APPAREIL PERMETTANT DE COMMUTER UNE INTERFACE LOGICIELLE D'UN TERMINAL MOBILE

(30) Priority: 01.08.2012 CN 201210271418
(43) Date of publication of application: 10.06.2015
(73) Proprietor: Tencent Technology Shenzhen Company Limited, Shenzhen, Guangdong 518044 (CN)
(72) Inventor: HUANG, Xusheng, Shenzhen Guangdong 518044 (CN)
(74) Representative: AWA Sweden AB
(86) International application number: PCT/CN2013/075963
(87) International publication number: WO 2014/019396

(56) References cited:
- WO-A1-00/11643
- CN-A- 1 754 167
- CN-A- 101 076 162
- CN-A- 101 179 791
- US-A1- 2009 309 711
- US-B1- 7 260 382

## Description

### TECHNICAL FIELD

The present invention relates to software application's user interface switching methods, and in particular, to a method and an apparatus for switching a software application's user interface of a mobile terminal.

### BACKGROUND

With the rapid development of mobile terminals (e.g., smartphones and tablets), the number and the quality of software applications running on mobile terminal are improved to a great extent. As a result, users have more and more requirements for the software applications, including the interaction between the software and a user. The conventional software application's user interface switching method is to change the interface of a software application through manual setting of the user or according to a predefined schedule. A problem with such approach is that it is too mechanical and lacks intelligence.

US 2009/0309711 A1 provides methods and systems enable selection of a theme for implementation on a computing device based on sensor data. The computing device can include a variety of sensors including sensors capable of sensing ambient temperature, light, and sound, as well as geographic position, for example, data collected by a sensor is used to select a theme correlated to the sensed condition. Data from sensors can also be used to generate customized advertisements that can be displayed on the computing device.

US 7 260 382 B1 provides a method and system for customizing a wireless device's user interface. During activation of the wireless device for service, the wireless carrier will use an identifier of the wireless device (such as an electronic serial number) as a basis to correlate the device with a vendor of the device and in turn to select a customization package that defines a user-interface corresponding with the vendor. For instance, the user interface can have color schemes, graphics, sounds and other attributes that are similar to the color schemes, graphics, sounds and other attributes that the vendor uses to promote the vendor's services or products. The wireless carrier will then send the customization package (or a pointer to the customization package) to the device, over the air in an activation response message for instance. And the device will responsively adopt the selected user interface as a base user interface.

### SUMMARY

A main objective of the present invention is to provide a method for switching a software application's user interface of a mobile terminal, so as to make interface switching more intelligent and more flexible.

According to some implementations, the present invention provides a method for switching a software application's user interface on a mobile terminal having one or more processors and memory for storing one or more modules to be executed by the one or more processors, which includes: while running the software application on the mobile terminal: collecting time-invariant information and time-variant information associated with the mobile terminal, wherein the time-variant information associated with the mobile terminal includes at least one of: the mobile terminal's current location information, the mobile terminal's current environmental temperature information, the mobile terminal's current time information, the mobile terminal's current environmental luminance information, and the mobile terminal's current speed and acceleration information; determining an update to the software application's user interface, wherein the update is at least in part dependent on the time-invariant information and time-variant information associated with the mobile terminal; and the method further includes: updating the software application's user interface according to the determined update; wherein the step of updating the software application's user interface further includes when the time-invariant information associated with the mobile terminal includes a device serial number, obtaining a color of the mobile terminal after a server analyzes color bits of the device serial number, changing a color of the user interface of the software application according to the color of the mobile terminal; changing a font size of the user interface of the software application according to the mobile terminal's current environmental luminance information and the mobile terminal's current time information.

According to some implementations, the present invention provides a method performed at a computer server for determining how to update a software application's user interface at a mobile terminal remote from the computer server, which includes: receiving data wirelessly from the mobile terminal, the data including time-invariant information and time-variant information associated with the mobile terminal, wherein the time-variant information associated with the mobile terminal includes at least one of: the mobile terminal's current location information, the mobile terminal's current environmental temperature information, the mobile terminal's current time information, the mobile terminal's current environmental luminance information, and the mobile terminal's current speed and acceleration information; identifying a user interface configuration from a plurality of user interface configurations associated with a user of the mobile device in accordance with the received data; and the method further includes: sending a user interface updating instruction to the mobile terminal, the user interface updating instruction including the identified user interface configuration, wherein the user interface updating instruction includes instructions for: when the time-invariant information associated with the mobile terminal includes a device serial number, obtaining a color of the mobile terminal after analyzing color bits of the device serial number, changing a color of the user interface of the software application according to the color of the mobile terminal; changing a font size of the user interface of the software application according to the mobile terminal's current environmental luminance information and the mobile terminal's current time information.

According to some implementations, a mobile terminal includes a display, one or more processors, and a memory for storing one or more modules to be executed by the one or more processors. The one or more modules further including instructions for: while running a software application on the mobile terminal: collecting time-invariant information and time-variant information associated with the mobile terminal, wherein the time-variant information associated with the mobile terminal includes at least one of: the mobile terminal's current location information, the mobile terminal's current environmental temperature information, the mobile terminal's current time information, the mobile terminal's current environmental luminance information, and the mobile terminal's current speed and acceleration information; determining an update to the software application's user interface, wherein the update is at least in part dependent on the time-invariant information and time-variant information associated with the mobile terminal; and the one or more modules further include instructions for: updating the software application's user interface according to the determined update; wherein the step of updating the software application's user interface further includes: when the time-invariant information associated with the mobile terminal includes a device serial number, obtaining a color of the mobile terminal after a server analyzes color bits of the device serial number, changing a color of the user interface of the software application according to the color of the mobile terminal; changing a font size of the user interface of the software application according to the mobile terminal's current environmental luminance information and the mobile terminal's current time information.

In the present invention, interface information of software in the mobile terminal may be switched on the basis of the device information and/or current environmental information, and in this way, interface setting not only can be performed manually but also can be intelligently identified by the device itself in use, so as to switch the interface information. Therefore, different interfaces may exist in situations that the mobile terminal is in different occasions (locations), environments, at different speeds, and so on, which can enrich the flexibility and timeliness of software application's user interface switching to a great extent and improve the intelligence of interface switching.

### BRIEF DESCRIPTION OF DRAWINGS

FIG. 1 is a schematic flowchart of steps in an implementation of a method for switching a software application's user interface of a mobile terminal according to the present invention;
FIG. 2 is a schematic flowchart of a search step in another implementation of a method for switching a software application's user interface of a mobile terminal according to the present invention;
FIG. 3 is a schematic diagram of effect presentation of corresponding software in a mobile terminal according to an implementation of the present invention;
FIG. 4 is a schematic structural diagram of an implementation of an apparatus for switching a software application's user interface of a mobile terminal according to the present invention; and
FIG. 5 is a schematic structural diagram of an interface search module in another implementation of an apparatus for switching a software application's user interface of a mobile terminal according to the present invention.
FIG. 6 is a block diagram of a network environment involving a server system providing user interface update instructions to multiple mobile terminals according to some implementations.
FIG. 7 is a block diagram of a server system for determining the user interface update instructions according to some implementations.
FIG. 8 is a block diagram of a mobile terminal for adaptively updating its software application's user interface based, at least in part, on the surrounding environment according to some implementations.
FIG. 9 is a flow chart of an exemplary process performed by the mobile terminal according to some implementations.
FIG. 10 is a flow chart of an exemplary process performed by the server system according to some implementations.

The implementation, functional characteristics, and advantages of the objectives of the present invention are further illustrated in combination with implementations and with reference to the accompanying drawings.

### DETAILED DESCRIPTION

It should be understood that, specific implementations described herein are merely intended for explaining the present invention, rather than limiting the present invention.

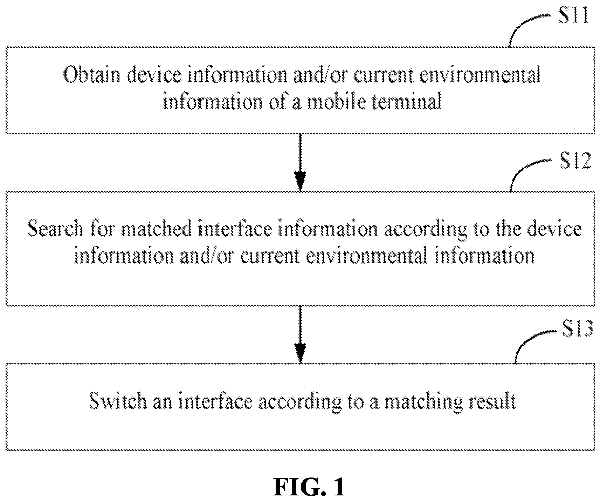

Referring to FIG. 1, an implementation of a method for switching a software application's user interface of a mobile terminal according to the present invention is provided. The method may include:
Step S11: Obtain device information and/or current environmental information of a mobile terminal.
Step S12: Search for matched interface information according to the device information and/or current environmental information.
Step S13: Switch an interface according to a matching result.

The foregoing method for switching a software application's user interface of a mobile terminal, through intelligently identifying the device information and/or current environmental information of the mobile terminal, determines and switches the user interface information for corresponding software in the mobile terminal in real time.

The foregoing mobile terminal may include a portable personal computer, a tablet computer, a smart phone, a portable audio-video device, and other portable electronic devices. The foregoing device information (also referred to as "time-invariant information") may include: a device serial number, a device identifier (e.g., an IMEI number of a smartphone), an operating system version number, and/or an application version number, and so on. The foregoing current environmental information (also referred to as "time-variant information") may include: current location information, current environmental temperature information, and/or current speed and acceleration information, and so on. The foregoing interface information may include: an interface color and/or an interface structure, and so on.

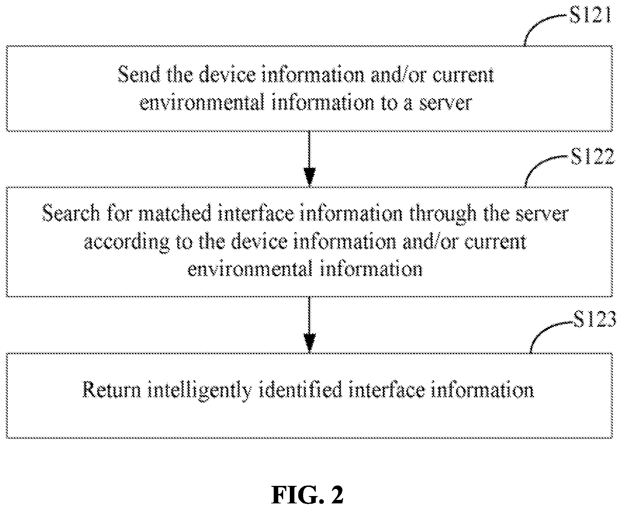

Referring to FIG. 2, in another implementation of the present invention, the foregoing step S12 may include:
Step S121: Send the device information and/or current environmental information from a mobile terminal to a remote server.
Step S122: Search for matched interface information through the server according to the device information and/or current environmental information.
Step S123: Return the intelligently identified interface information from the server to the mobile terminal.

The searching of the matched interface information may be performed locally or performed at the server, or the two ways may also be combined and provided for the mobile terminal to select. In this implementation, in order to reduce the burden of the mobile terminal and take account of the comprehensiveness of data, the foregoing process may be performed at the server. Therefore, after obtaining the device information and/or current environmental information, the mobile terminal may send the obtained information to the server, and the matched interface information is searched through the server according to the obtained device information and/or current environmental information. After the matched interface information is found, the interface information may be immediately returned to the mobile terminal, so as to switch the software application's user interface in time. The server may return the interface information to the mobile terminal by means of a predefined communication channel, and switching can be performed after the mobile terminal confirms the recommendation.

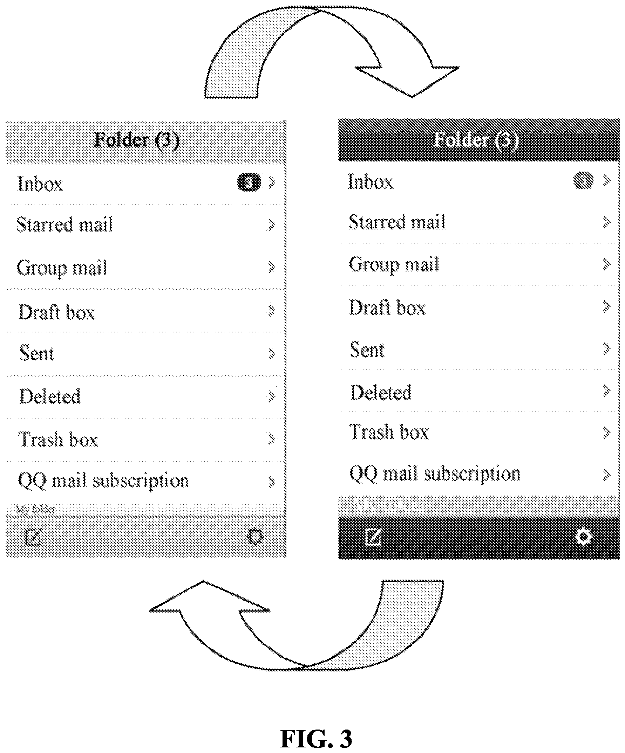

In an example of the present invention, when the obtained device information of the mobile terminal is the device serial number, such as, a serial number of a mobile device such as an iPhone, iPad, or iTouch, the last several bits of the device serial number, which indicate the color of the device, are read and sent to the server, and a color of the device can be obtained by analyzing the color bits through the server; therefore, a suitable interface color is searched for the software application of the mobile terminal. For example, if the device is in a white color, a light-colored software application's user interface color may be chosen for the device, or when the device is black, a dark-colored software application's user interface color may be used for the device, and so on. Referring to FIG. 3, it is a schematic diagram illustrating the effect of changing the corresponding software application's user interface color in a mobile terminal. The interface color solution may be preset and enriched as much as possible, so that the mobile terminal can conveniently match a most suitable interface color.

In another example of the present invention, when the obtained current environmental information of the mobile terminal device is the current location information or current speed and acceleration information, a user preference database corresponding to the mobile terminal may be queried, through the server according to the current location information or current speed and acceleration information, for matched interface information. A location coordinate may be obtained through a location based service (LBS) for the current location information, and the current speed and acceleration information may be obtained through a gravity sensing device. In this example, a function of the LBS or a gravity sensing device needs to be internally or externally set to the mobile terminal (for current environmental temperature or humidity, a corresponding sensing device is also required). The user preference database may be formed by gradually accumulating and analyzing user behaviors, and formed by recording situations of interfaces used by the mobile terminal in different occasions, so as to give a proper recommendation in subsequent matching. The process of the mobile terminal using corresponding software is a self-learning process of the user preference database and keeps cycling. In the user preference database, universal data (such as an interface color matching solution) may be pre-stored from the very beginning.

In the foregoing method for switching a software application's user interface of a mobile terminal, interface information of software in the mobile terminal may be switched on the basis of the device information and/or current environmental information, and in this way, interface setting not only can be performed manually but also can be intelligently identified by the device itself in use, so as to switch the interface information. Therefore, different interfaces may exist in situations that the mobile terminal is in different occasions (locations), at different speeds, and so on, which can enrich the flexibility and timeliness of software application's user interface switching to a great extent and improve the intelligence of interface switching.

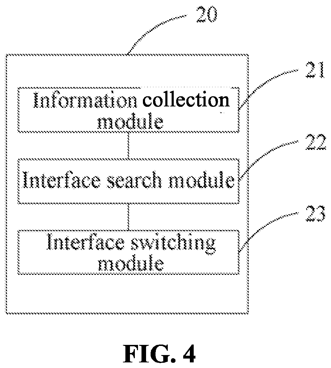

Referring to FIG. 4, an implementation of an apparatus 20 for switching a software application's user interface of a mobile terminal according to the present invention is provided. The apparatus 20 may include: an information collection module 21, an interface search module 22, and an interface switching module 23. The information collection module 21 is configured to obtain device information and/or current environmental information of a mobile terminal. The interface search module 22 is configured to search for matched interface information according to the device information and/or current environmental information. The interface switching module 23 is configured to switch an interface according to a matching result.

In the apparatus 20 for switching a software application's user interface of a mobile terminal, the device information and/or current environmental information of the mobile terminal may be intelligently identified through the information collection module 21, and adapted interface information may be searched for corresponding software in the mobile terminal by using the interface search module 22 and is switched in real time by using the interface switching module 23, so as to achieve intelligence, real-time performance, and flexibility, and so on of software application's user interface switching in the mobile terminal.

The foregoing mobile terminal may include a portable personal computer, a tablet computer, a smart phone, a portable audio-video device, and other portable electronic devices. The foregoing device information may include: a device serial number, an operating system version number, and/or an application version number, and so on. The foregoing current environmental information may include: current location information, current environmental temperature information, and/or current speed and acceleration information, and so on. The foregoing interface information may include: an interface color (color) and/or an interface structure, and so on.

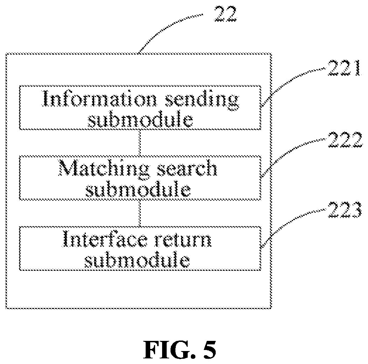

Referring to FIG. 5, in another implementation of the present invention, the interface search module 22 may include: an information sending submodule 221, a matching search submodule 222, and an interface return submodule 223. The information sending submodule 221 is configured to send the device information and/or current environmental information to a server. The matching search submodule 222 is configured to search for matched interface information through the server according to the device information and/or current environmental information. The interface return submodule 223 is configured to return intelligently identified interface information.

The searching of the matched interface information may be performed locally or performed at the server, or the two ways may also be combined and provided for the mobile terminal to select. In this implementation, in order to reduce the burden of the mobile terminal and take account of the comprehensiveness of data, the foregoing process may be performed at the server. Therefore, after obtaining the device information and/or current environmental information, the mobile terminal may send the obtained information to the server, and the matched interface information is searched through the server according to the obtained device information and/or current environmental information. After the matched interface information is found, the interface information may be immediately returned to the mobile terminal, so as to switch the software application's user interface in time. The server may return the interface information to the mobile terminal by means of a recommendation, and switching can be performed after the mobile terminal confirms the recommendation.

In an example of the present invention, when the obtained device information of the mobile terminal is the device serial number, such as, a serial number of a device such as an iPhone, iPad, or iTouch, the last several color bits of the device serial number are read and sent to the server, and a shell color of the device can be obtained by analyzing the color bits through the server; therefore, a suitable interface color is searched for software of the mobile terminal. For example, if a shell of a device is white, a light-colored software application's user interface color may be searched for the device, or when a shell of a device is black, a dark-colored software application's user interface color may be searched for the device, and so on. Referring to FIG. 3, it is a schematic diagram of effect presentation of corresponding software in a mobile terminal. The interface color solution may be preset and enriched as much as possible, so that the mobile terminal can conveniently match a most suitable interface color.

In another example of the present invention, when the obtained current environmental information of the mobile terminal device is the current location information or current speed and acceleration information, a user preference database corresponding to the mobile terminal may be queried, through the server according to the current location information or current speed and acceleration information, for matched interface information. A location coordinate may be obtained through an LBS for the current location information, and the current speed and acceleration information may be obtained through a gravity sensing device. In this example, a function of the LBS or a gravity sensing device needs to be internally or externally set to the mobile terminal (for current environmental temperature or humidity, a corresponding sensing device is also required). The user preference database may be formed by gradually accumulating and analyzing user behaviors, and formed by recording situations of interfaces used by the mobile terminal in different occasions, so as to give a proper recommendation in subsequent matching. The process of the mobile terminal using corresponding software is a self-learning process of the user preference database and keeps cycling. In the user preference database, universal data (such as an interface color matching solution) may be pre-stored from the very beginning.

In the apparatus 20 for switching a software application's user interface of a mobile terminal, interface information of software in the mobile terminal may be switched on the basis of the device information and/or current environmental information, and in this way, interface setting not only can be performed manually but also can be intelligently identified by the device itself in use, so as to switch the interface information. Therefore, different interfaces may exist in situations that the mobile terminal is in different occasions (locations), at different speeds, and so on, which can enrich the flexibility and timeliness of software application's user interface switching to a great extent and improve the intelligence of interface switching.

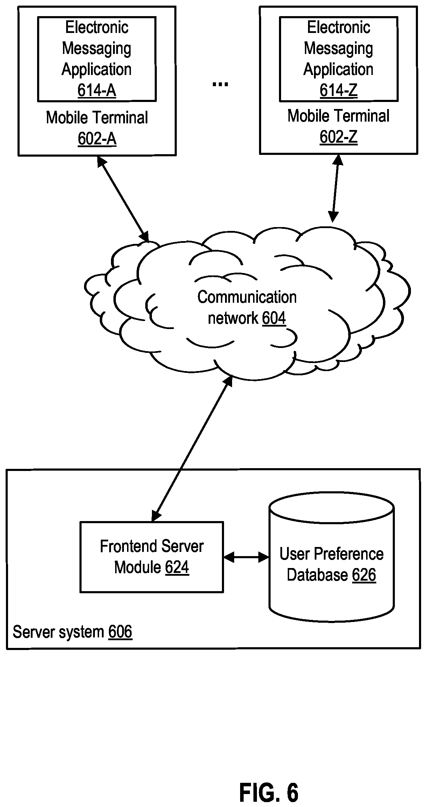

FIG. 6 is a block diagram of a network environment involving a server system providing user interface update instructions to multiple mobile terminals according to some implementations. Multiple mobile terminals (602-A to 602-Z) are connected to a server system 606 through a communication network 604. A mobile terminal includes one or more software applications (e.g., electronic messaging applications 614-A or 614-Z), each software application having a predefined set of user interfaces. As noted above, a user of a mobile terminal can specify trigger conditions for adapting a software application's user interface based on the time-invariant information and time-variant information associated with the mobile terminal. Note that this user interface automatic adaption may be performed by the mobile terminal alone or by the mobile terminal and the server system 606 that works in concert. In the latter case, the server system 606 includes a frontend server module 624 for receiving information (e.g., the time-invariant and time-variant information) from a mobile terminal and returning a set of instructions to update the user interface for a software application on the mobile terminal. In some implementations, the server system 606 includes a user preference database 626 for storing the user's preference for the user interface of a software application on the mobile terminal. For example, the user may specify the color of the user interface when the mobile terminal (and therefore the software application) is under different luminance environments.

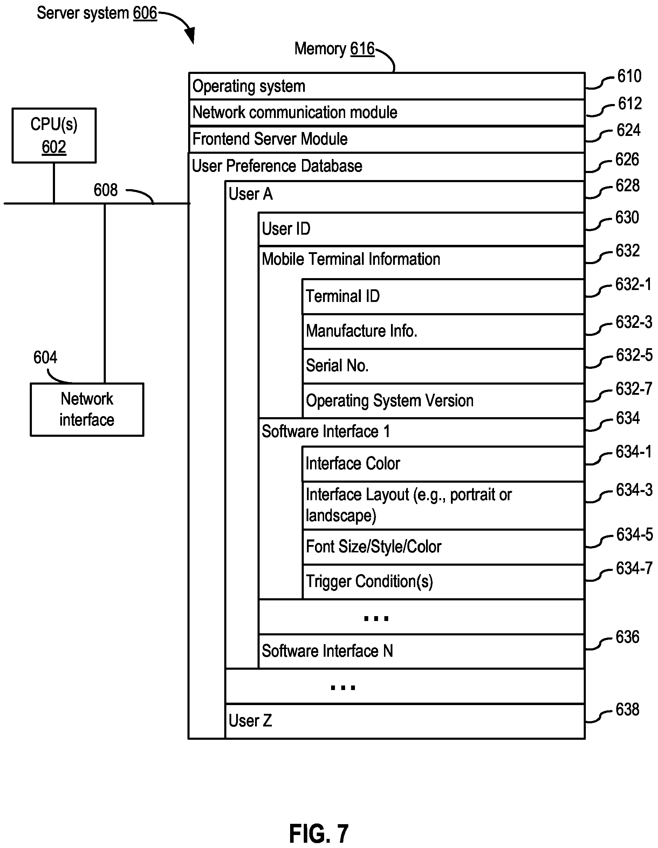

FIG. 7 is a block diagram of a server system for determining the user interface update instructions according to some implementations. The server system 606 includes one or more processors 602 for executing modules, programs and/or instructions stored in memory 616 and thereby performing predefined operations; one or more network or other communications interfaces 604; memory 616; and one or more communication buses 608 for interconnecting these components.

In some implementations, the memory 616 includes high-speed random access memory, such as DRAM, SRAM, or other random access solid state memory devices. In some implementations, memory 616 includes non-volatile memory, such as one or more magnetic disk storage devices, optical disk storage devices, flash memory devices, or other non-volatile solid state storage devices. In some implementations, memory 616 includes one or more storage devices remotely located from the processor(s) 602. Memory 616, or alternately one or more storage devices (e.g., one or more nonvolatile storage devices) within memory 616, includes a non-transitory computer readable storage medium. In some implementations, memory 616 or the computer readable storage medium of memory 616 stores the following programs, modules and data structures, or a subset thereof:
- an operating system 610 that includes procedures for handling various basic system services and for performing hardware dependent tasks;
- a network communications module 612 that is used for connecting the server system 606 to other computers (e.g., the mobile terminals 602 in FIG. 6) via the communication network interfaces 608 and one or more communication networks 604 (wired or wireless), other wide area networks, local area networks, metropolitan area networks, etc.;
- a frontend server module 620 for receiving a request or query from a mobile terminal 602 for identifying a new user interface for a particular software application currently running on the mobile terminal 602 based on the information provided by the mobile terminal 602, and returning a set of instructions for updating the user interface to the mobile terminal 602; and
- a user preference database 626 for storing different user interface settings under different conditions for respective software applications on mobile terminals associated with different users, the information associated with a particular user (628 or 638) further including:
   o a user identifier 630 (e.g., a phone number provided by the user);
   o mobile terminal information 632 including a mobile terminal identifier 632-1 (e.g., a unique parameter assigned to the mobile terminal by the server system 606), manufacture information 632-3 (e.g., the name of the name of the manufacturer), device serial number 632-5 (e.g., an IMEI number of a smartphone), operating system version 632-7, etc.; and
   ∘ one or more software interface settings (634, 636) for a particular software application, each setting further including an interface color 634-1, an interface layout 634-3 (e.g., portrait or landscape), font size/style/color 634-5, and one or more trigger conditions 634-7 for using the interface setting.

It should be noted that the modules and database in the server system 606 describe above in connection with FIG. 7 may be implemented on a single computer server or distributed among multiple computer servers that are connected by a computer network. Although a specific hardware configuration may affect the performance of the server system 606, the implementation of the present application does not have any dependency on a particular hardware configuration.

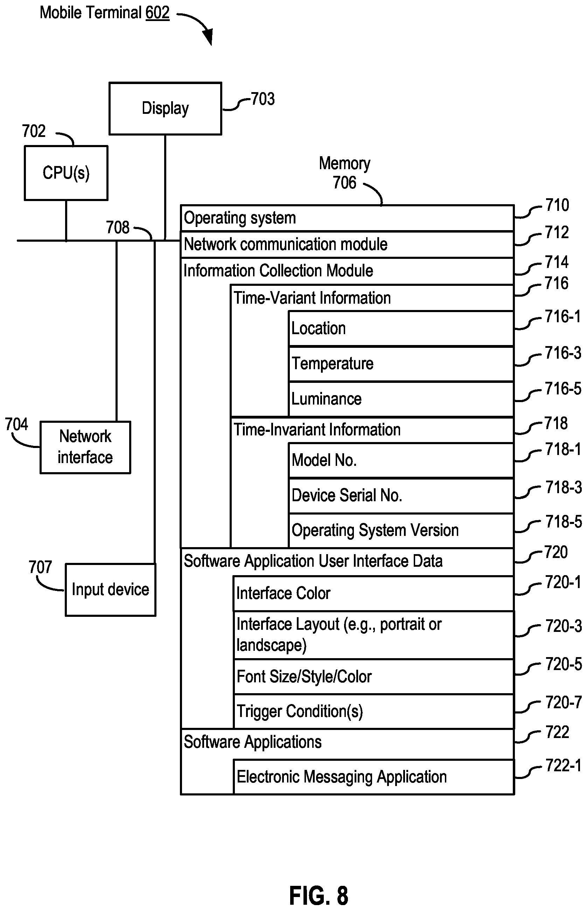

FIG. 8 is a block diagram of a mobile terminal 602 for adaptively updating its software application's user interface based, at least in part, on the surrounding environment according to some implementations. The mobile terminal 602 includes one or more processing units processors 702, one or more network interfaces 704, one or more input devices 707, memory 706, a display 703, and one or more communication buses 708 for interconnecting these components. The memory 706 typically includes high-speed random access memory, such as DRAM, SRAM, or other random access solid state memory devices; and optionally includes non-volatile memory, such as one or more magnetic disk storage devices, optical disk storage devices, flash memory devices, or other non-volatile solid state storage devices. The memory 706 optionally includes one or more storage devices remotely located from the processors 702. The memory 706 or alternatively the non-volatile memory device(s) within the memory 706, comprises a non-transitory computer readable storage medium. In some implementations, the memory 1006 or alternatively the non-transitory computer readable storage medium stores the following programs, modules and data structures, or a subset thereof:
- an operating system 710 that includes procedures for handling various basic system services and for performing hardware dependent tasks;
- a network communication module 712 for connecting the mobile terminal 602 with other devices (*e.g.*, the server system 606 or other mobile terminals) via the network interface 704 (wired or wireless) as well as the communication network 604 (FIG. 6);
- an information collection module 714 for collecting the time-variant information 716 (e.g., location 716-1, temperature 716-3 and luminance 716-5 of the environment, etc.) and time-invariant information 718 (e.g., the mobile terminal's model number 718-1, device serial number 718-3, operating system version 718-5, etc.);
- software application user interface data 720 (e.g., interface color 720-1, interface layout 720-3, font size/style/color 722, one or more trigger conditions 724, etc.; and
- one or more software applications 722 installed on the mobile terminal 602 (e.g., the electronic messaging application 722-1 that uses the information collected by the information collection module 714 to determine/update the software application user interface data 720).

As noted above, one aspect of the present application is to automatically modify the user interface of a software application running on a mobile terminal based on the time-invariant information and time-variant information. For example, most smartphones have a built-in camera that can not only take pictures but also determine the ambient luminance. Similarly, a built-in GPS module in a smartphone can determine the current location of the smartphone. Using such information, the mobile terminal 602, in combination with the server system 606, can determine whether it is in an indoor or outdoor environment and then adjust the color of the user interface of a software application running on the mobile terminal. For example, if the mobile terminal 602 is determined to be in an outdoor environment, a brighter color may be chosen for the user interface to make it easier for the user to interact with the software application and vice versa.

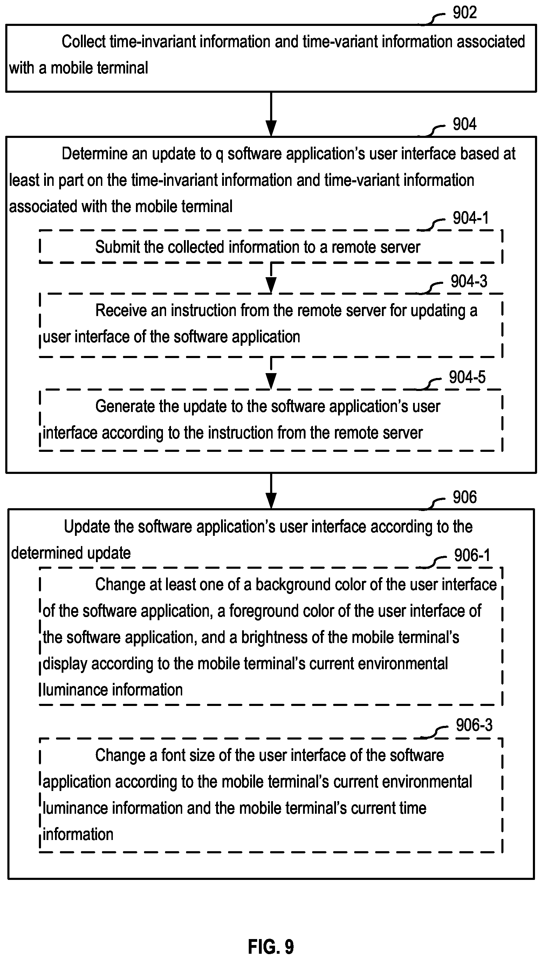

FIG. 9 is a flow chart of an exemplary process performed by a mobile terminal for updating a software application's user interface on the mobile terminal according to some implementations. While running the software application (e.g., the email application in FIG. 3) on the mobile terminal, the mobile terminal collects (902) time-invariant information and time-variant information associated with the mobile terminal. Note that the mobile terminal may be triggered to start collecting information by the software application or operate independently according to a predefined schedule. Exemplary types of time-invariant and time-variant information have been described above. For example, the time-invariant information associated with the mobile terminal includes at least one of: a device model number, a device serial number, an operating system version number, and/or an application version number. As noted above, at least a portion of the device serial number is an indicator of a color of the mobile terminal. The time-variant information associated with the mobile terminal includes at least one of: the mobile terminal's current location information, the mobile terminal's current environmental temperature information, the mobile terminal's current time information, the mobile terminal's current environmental luminance information, and the mobile terminal's current speed and acceleration information.

It is worth noting that the time-invariant information does not mean that such information never changes. For example, the operating system of the mobile terminal may change over time. But compared with the time-variant information like location, the time-invariant information changes at a significantly lower rate if it ever changes. In some implementations, the mobile terminal retrieves the time-invariant and time-variant information detected by different modules from a predefined location in its memory.

Using, at least in part, the collected information, the mobile terminal determines (904) an update to the software application's user interface. For example, if the mobile terminal is in a white color and currently located in an outdoor environment with a lot of sunshine, the mobile terminal may choose a dark color for the text in the user interface and a higher brightness contrast for a software application running on the mobile terminal to make it easier to recognize the objects on the display. In some implementations, the mobile terminal determines an update to the software application's user interface by itself. For example, the mobile terminal can use the built-in camera module and GPS module for determining whether it is in an indoor or outdoor environment. Sometimes, the mobile terminal may consult with another source for determining whether the collected information is accurate or not. For example, the mobile terminal may employ a weather forecast application to determine whether the mobile terminal is currently in a sunny (i.e., high luminance) or cloudy (i.e., low luminance) location.

In some other implementations, the mobile terminal works with a remote server for determining how to update the user interface. To do so, the mobile terminal submits (904-1) the collected information to the remote server (e.g., the server system 606 in FIG. 6) and receives (904-3) an instruction from the remote server for updating a user interface of the software application. The remote server accesses the user preference database 626 and determines what the user-desired interface setting is based at least in part on the collected information, time-invariant and time-variant. Base on the instruction from the remote server, the mobile terminal then generates (904-5) an update to the software application's user interface and updates (906) the software application's user interface accordingly.

In some implementations, the mobile terminal changes (906-1) at least one of a background color of the user interface of the software application, a foreground color of the user interface of the software application, and a brightness of the mobile terminal's display according to the mobile terminal's current environmental luminance information. As noted above, both time-invariant information (e.g., the mobile terminal's color) and time-variant information (e.g., the mobile terminal's location) may be used for updating the user interface of a software application running on the mobile terminal so as to provide a user interface that is convenient to the user of the mobile terminal to perform the user-specified operations and review the operation results.

In some other implementations, the mobile terminal may change (906-3) a font size of the user interface of the software application according to the mobile terminal's current environmental luminance information and the mobile terminal's current time information. For example, if the mobile may increase the font size if the mobile terminal is in a relatively dark environment (e.g., if the mobile terminal is used at night when there is no light on). As noted above, the mobile terminal's current location information, time information, and environmental luminance information are used for determining whether the mobile terminal is in an indoor environment or an outdoor environment. Based on such determination and in combination with some time-invariant information (e.g., the mobile terminal's color), the mobile terminal (with the help of the remote server) can apply an appropriate set of user interface settings to the software application currently running on the mobile terminal.

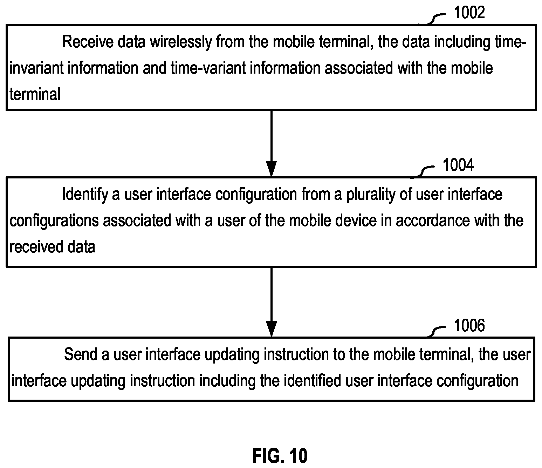

FIG. 10 is a flow chart of an exemplary process performed by the server system for determining how to update a software application's user interface at a mobile terminal according to some implementations. The server system receives (1002) data wirelessly from the mobile terminal. In this case, the data is a request for determining a user interface update and includes time-invariant information and time-variant information associated with the mobile terminal. In response to the request, the server system identifies (1004) a user interface configuration from a plurality of user interface configurations associated with a user of the mobile device in accordance with the received data. As noted above, the server system may query the user preference database for the update based on the data provided by the mobile terminal. For example, a user may specify in the database that a certain user interface setting should be applied when one or more predefined conditions are met, e.g., if the software application is used at a predefined location or during a predefined period of a day or in a particular indoor/outdoor environment, etc. Finally, the remote server sends (1006) a user interface updating instruction to the mobile terminal, the user interface updating instruction including the identified user interface configuration. As described above, the mobile terminal then applies the user interface configuration to the software application currently running on the mobile terminal to improve the user's experience of using the mobile terminal in a manner that requires least user involvement.

The foregoing descriptions are merely exemplary implementations of the present invention, and are not intended to limit the protection scope of the present invention.

The implementations described above only represent several implementation manners of the present invention, and descriptions thereof are specific and detailed, but should not be understood as a limit to the scope of the present invention. Therefore, the protection scope of the present invention should be subject to the protection scope of the appended claims.

Although the terms first, second, etc. may be used herein to describe various elements, these elements should not be limited by these terms. These terms are only used to distinguish one element from another. For example, first ranking criteria could be termed second ranking criteria, and, similarly, second ranking criteria could be termed first ranking criteria, without departing from the scope of the present invention. First ranking criteria and second ranking criteria are both ranking criteria, but they are not the same ranking criteria.

The terminology used in the description of the invention herein is for the purpose of describing particular implementations only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if' may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be obvious to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain principles of the invention and its practical applications, to thereby enable others skilled in the art to best utilize the invention and various implementations with various modifications as are suited to the particular use contemplated. Numerous specific details are set forth in order to provide a thorough understanding of the subject matter presented herein. But it will be apparent to one of ordinary skill in the art that the subject matter may be practiced without these specific details. In other instances, well-known methods, procedures, components, and circuits have not been described in detail so as not to unnecessarily obscure aspects of the implementations.

## Claims

1. A method for updating a software application's user interface on a mobile terminal, the mobile terminal having one or more processors and memory for storing one or more modules to be executed by the one or more processors, the method comprising:
at the mobile terminal:
while running a software application on the mobile terminal:
collecting time-invariant information and time-variant information associated with the mobile terminal (902); wherein the time-variant information associated with the mobile terminal comprises the mobile terminal's current time information, the mobile terminal's current environmental luminance information, and optionally at least one of: the mobile terminal's current location information, the mobile terminal's current environmental temperature information, and the mobile terminal's current speed and acceleration information;
determining an update to the software application's user interface, wherein the update is at least in part dependent on the time-invariant information and time-variant information associated with the mobile terminal (904);
and **characterized in that** the method further comprises:
updating the software application's user interface according to the determined update (906), wherein the time-invariant information associated with the mobile terminal comprises a device serial number and the step of updating the software application's user interface further comprises: obtaining a color of the mobile terminal after a server analyzes color bits of the device serial number, changing a color of the user interface of the software application according to the color of the mobile terminal;
changing a font size of the user interface of the software application according to the mobile terminal's current environmental luminance information and the mobile terminal's current time information (906-3).

2. The method according to claim 1, wherein the step of determining an update to the software application's user interface (904) further comprises:
submitting the collected information to a remote server (904-1);
receiving an instruction from the remote server for updating a user interface of the software application (904-3), wherein the instruction is at least in part dependent on the collected information; and
generating the update to the software application's user interface according to the instruction from the remote server (904-5).

3. The method according to claim 1, wherein the time-invariant information associated with the mobile terminal further comprises at least one of: a device model number, an operating system version number, and/or an application version number.

4. The method according to claim 3, wherein at least a portion of the device serial number is an indicator of a color of the mobile terminal.

5. The method according to claim 1, wherein the step of updating the software application's user interface further comprises changing at least one of a background color of the user interface of the software application, a foreground color of the user interface of the software application, and a brightness of the mobile terminal's display according to the mobile terminal's current environmental luminance information (906-1).

6. A method for determining how to update a software application's user interface at a mobile terminal, comprising:
at a computer server having one or more processors and memory for storing one or more modules to be executed by the one or more processors:
receiving data wirelessly from the mobile terminal, the data comprising time-invariant information and time-variant information associated with the mobile terminal (1002), wherein the time-variant information associated with the mobile terminal comprises the mobile terminal's current time information, the mobile terminal's current environmental luminance information, and optionally at least one of: the mobile terminal's current location information, the mobile terminal's current environmental temperature information, and the mobile terminal's current speed and acceleration information;
identifying a user interface configuration from a plurality of user interface configurations associated with a user of the mobile device in accordance with the received data (1004); and **characterized in that** the method further comprises:
sending a user interface updating instruction to the mobile terminal, the user interface updating instruction comprising the identified user interface configuration (1006); wherein the time-invariant information associated with the mobile terminal comprises a device serial number and the user interface updating instruction comprises instructions for:
obtaining a color of the mobile terminal after analyzing color bits of the device serial number, changing a color of the user interface of the software application according to the color of the mobile terminal;
changing a font size of the user interface of the software application according to the mobile terminal's current environmental luminance information and the mobile terminal's current time information.

7. The method according to claim 6, wherein the time-invariant information associated with the mobile terminal further comprises at least one of: a device model number, an operating system version number, and/or an application version number.

8. The method according to claim 6, wherein the user interface updating instruction further comprises instructions for changing at least one of a background color of the user interface of the software application, a foreground color of the user interface of the software application, and a brightness of the mobile terminal's display according to the mobile terminal's current environmental luminance information.

9. A mobile terminal, comprising:
a display;
one or more processors; and
a memory for storing one or more modules to be executed by the one or more processors, the one or more modules further comprising instructions for:
while running a software application on the mobile terminal:
collecting time-invariant information and time-variant information associated with the mobile terminal (902), wherein the time-variant information associated with the mobile terminal comprises the mobile terminal's current time information, the mobile terminal's current environmental luminance information, and optionally at least one of: the mobile terminal's current location information, the mobile terminal's current environmental temperature information, and the mobile terminal's current speed and acceleration information;
determining an update to the software application's user interface, wherein the update is at least in part dependent on the time-invariant information and time-variant information associated with the mobile terminal (904);
**characterized in that** the one or more modules further comprise instructions for:
updating the software application's user interface according to the determined update (906), wherein the time-invariant information associated with the mobile terminal comprises a device serial number and the step of updating the software application's user interface further comprises:
obtaining a color of the mobile terminal after a server analyzes color bits of the device serial number, changing a color of the user interface of the software application according to the color of the mobile terminal;
changing a font size of the user interface of the software application according to the mobile terminal's current environmental luminance information and the mobile terminal's current time information (906-3).

10. The mobile terminal according to claim 9, wherein the instruction for determining an update to the software application's user interface further comprises instructions for:
submitting the collected information to a remote server (904-1);
receiving an instruction from the remote server for updating a user interface of the software application (904-3); and
updating the software application's user interface according to the instruction from the remote server (904-5).

11. The mobile terminal according to claim 9, wherein the time-invariant information associated with the mobile terminal further comprises at least one of: a device model number, an operating system version number, and/or an application version number.

12. The mobile terminal according to claim 11, wherein at least a portion of the device serial number is an indicator of a color of the mobile terminal.

13. The mobile terminal according to claim 9, wherein the step of updating the software application's user interface further comprises changing at least one of a background color of the user interface of the software application, a foreground color of the user interface of the software application, and a brightness of the mobile terminal's display according to the mobile terminal's current environmental luminance information (906-1).

## Patentansprüche

1. Verfahren zum Aktualisieren der Benutzerschnittstelle einer Softwareanwendung auf einem mobilen Endgerät, wobei das mobile Endgerät einen oder mehrere Prozessoren und Speicher zum Speichern eines oder mehrerer Module aufweist, die von einem oder mehreren Prozessoren ausgeführt werden sollen, das Verfahren umfassend:
auf dem mobilen Endgerät:
beim Ausführen einer Softwareanwendung auf dem mobilen Endgerät:
Sammeln von zeitinvarianten Informationen und zeitvarianten Informationen, die dem mobilen Endgerät (902) zugeordnet sind; wobei die zeitvarianten Informationen, die dem mobilen Endgerät zugeordnet sind, die aktuellen Zeitinformationen des mobilen Endgeräts, die aktuellen Umgebungshelligkeitsinformationen des mobilen Endgeräts und optional mindestens eines von folgenden umfassen: die aktuellen Standortinformationen des mobilen Endgeräts, die aktuellen Umgebungstemperaturinformationen des mobilen Endgeräts und die aktuellen Geschwindigkeits- und Beschleunigungsinformationen des mobilen Endgeräts;
Bestimmen eines Updates der Benutzerschnittstelle einer Softwareanwendung, wobei das Update mindestens teilweise von den zeitinvarianten Informationen und zeitvarianten Informationen, die dem mobilen Endgerät (904) zugeordnet sind, abhängig ist;
und **dadurch gekennzeichnet, dass** das Verfahren ferner umfasst:
Aktualisieren der Benutzerschnittstelle einer Softwareanwendung gemäß dem bestimmten Update (906), wobei die dem mobilen Endgerät zugeordnete zeitinvariante Information eine Geräteseriennummer umfasst und der Schritt des Aktualisierens der Benutzerschnittstelle einer Softwareanwendung ferner umfasst:
Erhalten einer Farbe des mobilen Endgeräts, nachdem ein Server Farbbits der Geräteseriennummer analysiert hat, Ändern einer Farbe der Benutzerschnittstelle einer Softwareanwendung entsprechend der Farbe des mobilen Endgeräts;
Ändern einer Schriftgröße der Benutzerschnittstelle einer Softwareanwendung gemäß den aktuellen
Umgebungshelligkeitsinformationen des mobilen Endgeräts und den aktuellen Zeitinformationen des mobilen Endgeräts (906-3).

2. Verfahren nach Anspruch 1, wobei der Schritt des Bestimmens einer Aktualisierung der Benutzerschnittstelle einer Softwareanwendung (904) ferner umfasst:
Übertragen der gesammelten Informationen an einen Remote-Server (904-1);
Empfangen einer Anweisung vom Remote-Server zum Aktualisieren einer Benutzerschnittstelle einer Softwareanwendung (904-3), wobei die Anweisung mindestens teilweise von den gesammelten Informationen abhängig ist; und
Erzeugen des Updates für die Benutzerschnittstelle einer Softwareanwendung gemäß der Anweisung des Remote-Servers (904-5).

3. Verfahren nach Anspruch 1, wobei die mit dem mobilen Endgerät verknüpften zeitinvarianten Informationen ferner mindestens eine von:
einer Gerätemodellnummer, einer Betriebssystem-Versionsnummer und/oder einer Anwendungs-Versionsnummer umfassen.

4. Verfahren nach Anspruch 3, wobei mindestens ein Teil der Geräteseriennummer ein Indikator für eine Farbe des mobilen Endgeräts ist.

5. Verfahren nach Anspruch 1, wobei der Schritt des Aktualisierens der Benutzerschnittstelle einer Softwareanwendung ferner das Ändern mindestens einer der Hintergrundfarben der Benutzerschnittstelle einer Softwareanwendung, einer Vordergrundfarbe der Benutzerschnittstelle einer Softwareanwendung und einer Helligkeit der Anzeige des mobilen Endgeräts gemäß den aktuellen Umgebungshelligkeitsinformationen (906-1) des mobilen Endgeräts umfasst.

6. Verfahren zum Bestimmen, wie man die Benutzerschnittstelle einer Softwareanwendung auf einem mobilen Endgerät aktualisiert, umfassend:
auf einem Computerserver mit einem oder mehreren Prozessoren und Speichern zum Speichern eines oder mehrerer Module, die von einem oder mehreren Prozessoren auszuführen sind:
drahtloses Empfangen von Daten von dem mobilen Endgerät, wobei die Daten zeitinvarianten Informationen und zeitvarianten Informationen umfassen, die dem mobilen Endgerät (1002) zugeordnet sind, wobei die zeitvarianten Informationen, die dem mobilen Endgerät zugeordnet sind, die aktuellen Zeitinformationen des mobilen Endgeräts, die aktuellen Umgebungshelligkeitsinformationen des mobilen Endgeräts und optional mindestens eines von folgenden umfassen: die aktuellen Standortinformationen des mobilen Endgeräts, die aktuellen Umgebungstemperaturinformationen des mobilen Endgeräts und die aktuellen Geschwindigkeits- und Beschleunigungsinformationen des mobilen Endgeräts;
Identifizieren einer Benutzerschnittstellenkonfiguration aus mehreren Benutzerschnittstellenkonfigurationen, die einem Benutzer der mobilen Vorrichtung gemäß den empfangenen Daten (1004) zugeordnet sind;
und **dadurch gekennzeichnet, dass** das Verfahren ferner umfasst:
Senden einer Aktualisierungsanweisung für die Benutzerschnittstelle an das mobile Endgerät, wobei die Aktualisierungsanweisung für die Benutzerschnittstelle die identifizierte
Benutzerschnittstellenkonfiguration (1006) umfasst; wobei die dem mobilen Endgerät zugeordnete zeitinvariante Information eine Geräteseriennummer umfasst und die Aktualisierungsanweisung für die Benutzerschnittstelle Anweisungen umfasst zum: Erhalten einer Farbe des mobilen Endgeräts nach dem Analysieren von Farbbits der Geräteseriennummer, Ändern einer Farbe der Benutzerschnittstelle einer Softwareanwendung gemäß der Farbe des mobilen Endgeräts;
Ändern einer Schriftgröße der Benutzerschnittstelle einer Softwareanwendung gemäß den aktuellen Umgebungshelligkeitsinformationen des mobilen Endgeräts und den aktuellen Zeitinformationen des mobilen Endgeräts.

7. Verfahren nach Anspruch 6, wobei die mit dem mobilen Endgerät verknüpften zeitinvarianten Informationen ferner mindestens eine von:
einer Gerätemodellnummer, einer Betriebssystem-Versionsnummer und/oder einer Anwendungs-Versionsnummer umfassen.

8. Verfahren nach Anspruch 6, wobei die Aktualisierungsanweisung für die Benutzerschnittstelle ferner Anweisungen zum Ändern mindestens einer der Hintergrundfarben der Benutzerschnittstelle einer Softwareanwendung, einer Vordergrundfarbe der Benutzerschnittstelle einer Softwareanwendung und einer Helligkeit der Anzeige des mobilen Endgeräts gemäß den aktuellen Umgebungshelligkeitsinformationen des mobilen Endgeräts umfasst.

9. Mobiles Endgerät, umfassend:
ein Display;
einen oder mehrere Prozessor(en); und
einen Speicher zum Speichern eines oder mehrerer Module, die von einem oder mehreren Prozessoren auszuführen sind, wobei das eine oder die mehreren Module ferner Anweisungen umfassen zum:
beim Ausführen einer Softwareanwendung auf dem mobilen Endgerät: Sammeln von zeitinvarianten Informationen und zeitvarianten Informationen, die dem mobilen Endgerät (902) zugeordnet sind, wobei die zeitvarianten Informationen, die dem mobilen Endgerät zugeordnet sind, die aktuellen Zeitinformationen des mobilen Endgeräts, die aktuellen Umgebungshelligkeitsinformationen des mobilen Endgeräts und optional mindestens eines von folgenden umfassen: die aktuellen Standortinformationen des mobilen Endgeräts, die aktuellen Umgebungstemperaturinformationen des mobilen Endgeräts und die aktuellen Geschwindigkeits- und Beschleunigungsinformationen des mobilen Endgeräts;
Bestimmen eines Updates der Benutzerschnittstelle einer Softwareanwendung, wobei das Update mindestens teilweise von den zeitinvarianten Informationen und zeitvarianten Informationen, die dem mobilen Endgerät (904) zugeordnet sind, abhängig ist;
**dadurch gekennzeichnet, dass** das eine oder die mehreren Module ferner Anweisungen umfassen zum:
Aktualisieren der Benutzerschnittstelle einer Softwareanwendung gemäß dem bestimmten Update (906), wobei die dem mobilen Endgerät zugeordnete zeitinvariante Information eine Geräteseriennummer umfasst und der Schritt des Aktualisierens der Benutzerschnittstelle einer Softwareanwendung ferner umfasst: Erhalten einer Farbe des mobilen Endgeräts, nachdem ein Server Farbbits der Geräteseriennummer analysiert hat, Ändern einer Farbe der Benutzerschnittstelle einer Softwareanwendung entsprechend der Farbe des mobilen Endgeräts;
Ändern einer Schriftgröße der Benutzerschnittstelle einer Softwareanwendung gemäß den aktuellen Umgebungshelligkeitsinformationen des mobilen Endgeräts und den aktuellen Zeitinformationen des mobilen Endgeräts (906-3).

10. Mobiles Endgerät nach Anspruch 9, wobei die Anweisung zum Bestimmen eines Updates der Benutzerschnittstelle einer Softwareanwendung ferner Anweisungen umfasst zum:
Übertragen der gesammelten Informationen an einen Remote-Server (904-1);
Empfangen einer Anweisung vom Remote-Server zum Aktualisieren einer Benutzerschnittstelle einer Softwareanwendung (904-3); und Aktualisieren der Benutzerschnittstelle einer Softwareanwendung gemäß der Anweisung des Remote-Servers (904-5).

11. Mobiles Endgerät nach Anspruch 9, wobei die mit dem mobilen Endgerät verknüpften zeitinvarianten Informationen ferner mindestens eine von: einer Gerätemodellnummer, der Geräteseriennummer, einer Betriebssystem-Versionsnummer und/oder einer Anwendungs-Versionsnummer umfassen.

12. Mobiles Endgerät nach Anspruch 11, wobei mindestens ein Teil der Geräteseriennummer ein Indikator für eine Farbe des mobilen Endgeräts ist.

13. Mobiles Endgerät nach Anspruch 9, wobei der Schritt des Aktualisierens der Benutzerschnittstelle einer Softwareanwendung ferner das Ändern mindestens einer der Hintergrundfarben der Benutzerschnittstelle einer Softwareanwendung, einer Vordergrundfarbe der Benutzerschnittstelle einer Softwareanwendung und einer Helligkeit der Anzeige des mobilen Endgeräts gemäß den aktuellen Umgebungshelligkeitsinformationen (906-1) des mobilen Endgeräts umfasst.

## Revendications

1. Procédé pour la mise à jour d'une interface utilisateur d'application logicielle sur un terminal mobile, le terminal mobile ayant un ou plusieurs processeurs et une mémoire pour stocker un ou plusieurs modules à exécuter par ce ou ces processeurs, le procédé comprenant :
au niveau du terminal mobile :
pendant l'exécution d'une application logicielle sur le terminal mobile : collecter de l'information invariable dans le temps et de l'information variable dans le temps associées au terminal mobile (902) ; dans lequel l'information variable dans le temps associée au terminal mobile comprend l'information de temps actuel du terminal mobile, l'information de luminosité environnementale actuelle du terminal mobile, et en option, au moins l'une parmi : l'information d'emplacement actuel du terminal mobile, l'information de température environnementale actuelle du terminal mobile, et l'information de vitesse et d'accélération actuelles du terminal mobile ;
déterminer une mise à jour de l'interface utilisateur d'application logicielle, dans lequel la mise à jour est au moins en partie dépendante de l'information invariable dans le temps et de l'information variable dans le temps associées au terminal mobile (904) ;
et **caractérisé en ce que** le procédé comprend en outre :
la mise à jour de l'interface utilisateur d'application logicielle en fonction de la mise à jour (906) déterminée, dans lequel l'information invariable dans le temps associée au terminal mobile comprend un numéro de série du dispositif et
l'étape de mise à jour de l'interface utilisateur d'application logicielle comprend en outre :
l'obtention d'une couleur du terminal mobile après qu'un serveur analyse des bits de couleur du numéro de série du dispositif, le changement d'une couleur de l'interface utilisateur de l'application logicielle en fonction de la couleur du terminal mobile ;
le changement d'une taille de police de l'interface utilisateur de l'application logicielle en fonction de l'information de luminosité environnementale actuelle du terminal mobile et de l'information de temps actuel du terminal mobile (906-3).

2. Procédé selon la revendication 1, dans lequel l'étape de détermination d'une mise à jour pour l'interface utilisateur d'application logicielle (904) comprend en outre :
la soumission de l'information collectée à un serveur distant (904-1) ;
la réception d'une instruction du serveur distant pour mettre à jour une interface utilisateur de l'application logicielle (904-3), dans lequel l'instruction est au moins en partie dépendante de l'information collectée ; et
la génération de la mise à jour pour l'interface utilisateur d'application logicielle en fonction de l'instruction du serveur distant (904-5).

3. Procédé selon la revendication 1, dans lequel l'information invariable dans le temps associée au terminal mobile comprend en outre au moins l'un parmi : un numéro de modèle du dispositif, un numéro de version de système d'exploitation, et/ou un numéro de version d'application.

4. Procédé selon la revendication 3, dans lequel au moins une partie du numéro de série du dispositif est un indicateur d'une couleur du terminal mobile.

5. Procédé selon la revendication 1, dans lequel l'étape de mise à jour de l'interface utilisateur d'application logicielle comprend en outre le changement d'au moins l'une parmi une couleur d'arrière-plan de l'interface utilisateur de l'application logicielle, une couleur d'avant-plan de l'interface utilisateur de l'application logicielle, et une luminosité de l'afficheur du terminal mobile en fonction de l'information de luminosité environnementale actuelle (906-1) du terminal mobile.

6. Procédé pour déterminer comment mettre à jour une interface utilisateur d'application logicielle au niveau d'un terminal mobile, comprenant :
au niveau d'un serveur informatique ayant un ou plusieurs processeurs et une mémoire pour stocker un ou plusieurs modules à exécuter par ce ou ces processeurs :
la réception sans fil de données du terminal mobile, les données comprenant de l'information invariable dans le temps et de l'information variable dans le temps associées au terminal mobile (1002), dans lequel l'information variable dans le temps associée au terminal mobile comprend l'information de temps actuel du terminal mobile, l'information de luminosité environnementale actuelle du terminal mobile, et en option, au moins l'une parmi : l'information d'emplacement actuel du terminal mobile, l'information de température environnementale actuelle du terminal mobile, et l'information de vitesse et d'accélération actuelles du terminal mobile ;
l'identification d'une configuration d'interface utilisateur à partir d'une pluralité de configurations d'interface utilisateur associées à un utilisateur du dispositif mobile en fonction des données reçues (1004) ;
et **caractérisé en ce que** le procédé comprend en outre :
l'envoi d'une instruction de mise à jour d'interface utilisateur au terminal mobile, l'instruction de mise à jour d'interface utilisateur comprenant la configuration de l'interface utilisateur identifiée (1006) ;
dans lequel l'information invariable dans le temps associée au terminal mobile comprend un numéro de série de dispositif, et l'instruction de mise à jour d'interface utilisateur comprend des instructions pour :
obtenir une couleur du terminal mobile après l'analyse de bits de couleur du numéro de série du dispositif, le changement d'une couleur de l'interface utilisateur de l'application logicielle en fonction de la couleur du terminal mobile ;
le changement d'une taille de police de l'interface utilisateur de l'application logicielle en fonction de l'information de luminosité environnementale actuelle du terminal mobile et de l'information de temps actuel du terminal mobile.

7. Procédé selon la revendication 6, dans lequel l'information invariable dans le temps associée au terminal mobile comprend en outre au moins l'un parmi : un numéro de modèle du dispositif, un numéro de version de système d'exploitation, et/ou un numéro de version d'application.

8. Procédé selon la revendication 6, dans lequel l'instruction de mise à jour d'interface utilisateur comprend en outre des instructions pour changer au moins l'une parmi une couleur d'arrière-plan de l'interface utilisateur de l'application logicielle, une couleur d'avant-plan de l'interface utilisateur de l'application logicielle, et une luminosité de l'afficheur du terminal mobile en fonction de l'information de luminosité environnementale actuelle du terminal mobile.

9. Terminal mobile, comprenant :
un afficheur ;
un ou plusieurs processeurs ; et
une mémoire pour stocker un ou plusieurs modules à exécuter par ce ou ces processeurs, ce ou ces modules comprenant en outre des instructions pour :
pendant l'exécution d'une application logicielle sur le terminal mobile :
collecter de l'information invariable dans le temps et de l'information variable dans le temps associées au terminal mobile (902) ; dans lequel l'information variable dans le temps associée au terminal mobile comprend l'information de temps actuel du terminal mobile, l'information de luminosité environnementale actuelle du terminal mobile, et en option, au moins l'une parmi : l'information d'emplacement actuel du terminal mobile, l'information de température environnementale actuelle du terminal mobile, et l'information de vitesse et d'accélération actuelles du terminal mobile ;
déterminer une mise à jour pour l'interface utilisateur d'application logicielle, dans lequel la mise à jour est au moins en partie dépendante de l'information invariable dans le temps et de l'information variable dans le temps associées au terminal mobile (904) ;
**caractérisé en ce que** ce ou ces modules comprennent en outre des instructions pour :
mettre à jour l'interface utilisateur de l'application logicielle en fonction de la mise à jour déterminée (906), dans lequel l'information invariable dans le temps associée au terminal mobile comprend un numéro de série du dispositif et l'étape de mise à jour de l'interface utilisateur d'application logicielle comprend en outre :
l'obtention d'une couleur du terminal mobile après qu'un serveur analyse des bits de couleur du numéro de série du dispositif, le changement d'une couleur de l'interface utilisateur de l'application logicielle en fonction de la couleur du terminal mobile ;
le changement d'une taille de police de l'interface utilisateur de l'application logicielle en fonction de l'information de luminosité environnementale actuelle du terminal mobile et de l'information de temps actuel du terminal mobile (906-3).

10. Terminal mobile selon la revendication 9, dans lequel l'instruction pour déterminer une mise à jour pour l'interface utilisateur de l'application logicielle comprend en outre des instructions pour :
soumettre l'information collectée à un serveur distant (904-1) ;
recevoir une instruction du serveur distant pour la mise à jour d'une interface utilisateur de l'application logicielle (904-3) ; et
mettre à jour l'interface utilisateur d'application logicielle en fonction de l'instruction du serveur distant (904-5).

11. Terminal mobile selon la revendication 9, dans lequel l'information invariable dans le temps associée au terminal mobile comprend en outre au moins l'un parmi : un numéro de modèle du dispositif, un numéro de version de système d'exploitation, et/ou un numéro de version d'application.

12. Terminal mobile selon la revendication 11, dans lequel au moins une partie du numéro de série du dispositif est un indicateur d'une couleur du terminal mobile.

13. Terminal mobile selon la revendication 9, dans lequel l'étape de mise à jour de l'interface utilisateur d'application logicielle comprend en outre le changement d'au moins l'une parmi une couleur d'arrière-plan de l'interface utilisateur de l'application logicielle, une couleur d'avant-plan de l'interface utilisateur de l'application logicielle, et une luminosité de l'afficheur du terminal mobile en fonction de l'information de luminosité environnementale actuelle du terminal mobile (906-1).
